# EUROPÄISCHE PATENTSCHRIFT

(11) **EP 1 684 457 B1**
(45) Veröffentlichungstag und Bekanntmachung des Hinweises auf die Patenterteilung: **30.01.2008**
(21) Anmeldenummer: 05113041.7
(22) Anmeldetag: 28.12.2005
(51) Int. Cl.: H04L 12/10

(54) **Spannungsversorgungsvorrichtung für einen Buskoppler und entsprechendes Betriebsverfahren**
Voltage supply apparatus for a bus coupler and corresponding operation method
Dispositif d'alimentation de tension pour un coupleur de bus et procédé d'operation correspondant

(30) Priorität: 20.01.2005 DE 102005002753
(43) Veröffentlichungstag der Anmeldung: 26.07.2006
(73) Patentinhaber: SIEMENS AKTIENGESELLSCHAFT, 80333 München (DE)
(72) Erfinder: Fichtner, Norbert, 84069, Schierling (DE)

(56) Entgegenhaltungen:
- DE-A1- 10 147 924
- US-B1- 6 590 755
- US-B1- 6 614 634

## Beschreibung

Die vorliegende Erfindung betrifft eine Spannungsversorgungsvorrichtung für ein Busgerät mit einer ersten Eingangsklemme und einer zweiten Eingangsklemme, einer ersten Ausgangsklemme, die mit der ersten Eingangsklemme verbunden ist, und eine zweite Ausgangsklemme, die mit der zweiten Eingangsklemme verbunden ist, sowie eine Abzweigschaltung, die zwischen die erste und zweite Eingangsklemme geschaltet ist, zum Abzweigen eines Abzweigstroms von der ersten zur zweiten Eingangklemme. Darüber hinaus betrifft die vorliegende Erfindung ein Verfahren zum Betreiben einer Spannungsversorgungsvorrichtung für ein Busgerät durch Abzweigen eines in die Spannungsversorgungsvorrichtung fließenden Stroms.

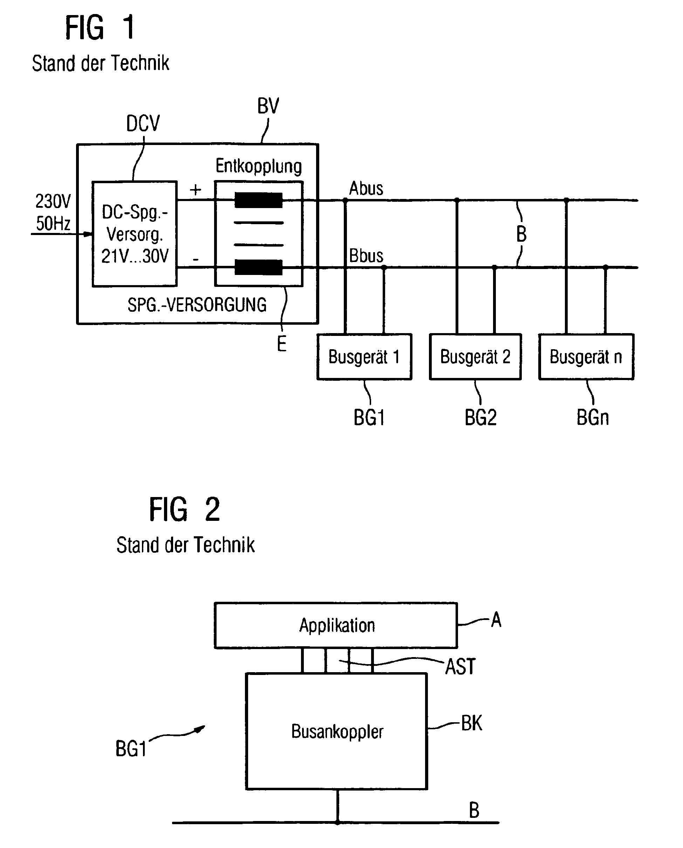

Der typische Aufbau eines Bussystems ist in FIG 1 dargestellt. Eine Vielzahl von Busgeräten BG1, BG2, ..., BGn ist beliebig an einem Bus B verteilt. Der Bus B besteht im vorliegenden Beispiel aus zwei Busleitungen Abus und Bbus. Jedes der Busgeräte BG1 bis BGn ist an beide Busleitungen Abus und Bbus angeschlossen.

Über den Bus erfolgt sowohl die Spannungsversorgung der Busgeräte BG1 bis BGn als auch die Datenübertragung. Zur Spannungsversorgung ist an den Bus eine Busversorgung BV angeschlossen. Die Busversorgung BV enthält ein Gleichspannungsversorgungsmodul DCV, das die übliche Netzspannung von 230 V, 50 Hz in eine Gleichspannung im Bereich von 21 V bis 30 V umsetzt. Dem Ausgang des Gleichstromversorgungsmoduls DCV ist eine Entkopplungseinheit E nachgeschaltet, die unter anderem zur Begrenzung der Steilheit des Stromanstiegs dient. Der Ausgang der Entkopplungseinheit E ist an die Busleitungen Abus und Bbus angeschlossen.

In FIG 2 ist ein Busgerät BG1 im Detail dargestellt. Es besteht aus einer Applikation A, die über eine Anwenderschnittstelle AST mit einem Busankoppler BK verbunden ist. Der Bus B ist hier lediglich mit einer Leitung symbolisiert. Bei dem Bus B kann es sich beispielsweise um einen EIB-Bus handeln. An einer Standard-EIB-Anwenderschnittstelle AST des Busankopplers BK werden typischerweise 5 V/10 mA (maximal 25 mA) und 20 V/5 mA zur Verfügung gestellt. Diese Spannungen werden in der Regel von einer integrierten Schaltung aus dem EIB geliefert.

Da über die Busleitung sowohl die Spannungsversorgung der Busgeräte als auch die Datenübertragung erfolgt, ist eine Entkopplung der Entspannungsversorgung von der Datenübertragung für jeden Busteilnehmer erforderlich. Unter Entkopplung ist hierbei zu verstehen, dass die Spannungsversorgung der Busteilnehmer die Datenübertragung nicht beeinträchtigt. Eine Beeinträchtigung würde zum Beispiel vorliegen, wenn die Datenübertragung durch die Spannungsversorgung in den Busteilnehmern bedämpft wird und dadurch die Übertragungsreichweite abnimmt.

Eine gängige Methode zur Entkopplung ist der Einsatz eines Eingangsübertragers, wie er auch in den Busgeräten früherer Generationen eingesetzt wird. Der Eingangsübertrager bringt allerdings den Nachteil mit sich, dass er relativ groß und teuer ist. Des Weiteren ist die maximale Anzahl der Busteilnehmer aufgrund der induktiven Belastung begrenzt.

Häufig ist jedoch auch die Spannungsversorgung nicht für die geforderten Leistungsdaten ausgelegt. Beispielsweise wird für eine Anwenderschnittstelle eine Leistungsversorgung von 20V/25mA benötigt. Diese Leistung kann mit den üblichen Busankopplungen bzw. integrierten Schaltungen nicht zur Verfügung gestellt werden.

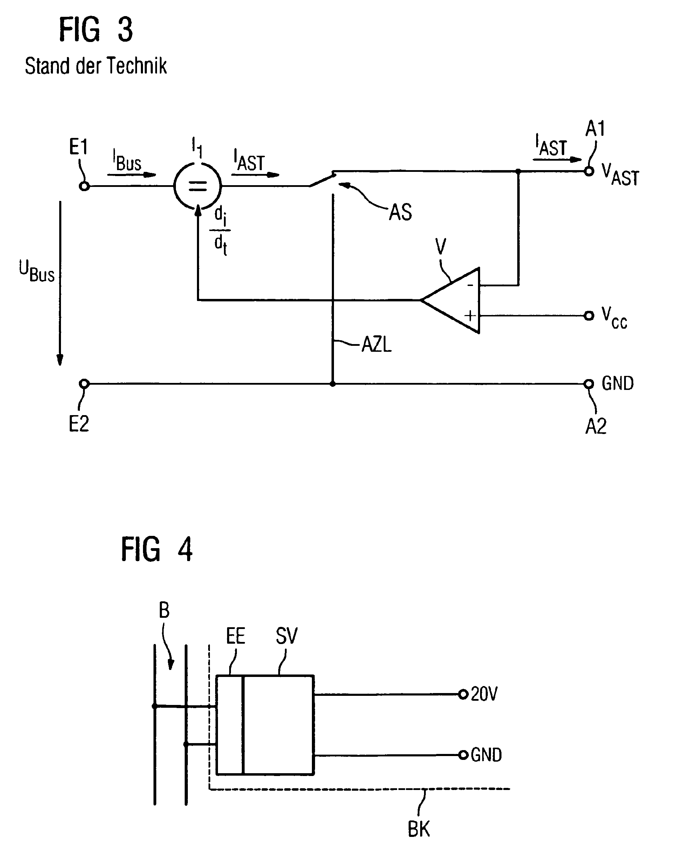

In diesem Zusammenhang ist aus der EP 0836286 A1 eine Betriebsspannungsquelle mit erhöhter Leistung bekannt. Eine derartige Betriebsspannungsquelle ist in FIG 3 wiedergegeben. Sie stellt im Wesentlichen ein Viertor mit zwei Eingangsklemmen E1 und E2 und zwei Ausgangsklemmen A1 und A2 dar. Die Eingangsklemme E1 ist über eine steuerbare Stromquelle I₁ und eine Abzweigschaltung AS mit der Ausgangsklemme A1 verbunden. Die beiden Klemmen E2 und A2 sind hingegen direkt miteinander verbunden. Außerdem sind sie über eine Abzweigleitung AZL an die Abzweigschaltung AS angeschlossen. Die steuerbare Stromquelle I₁ wird über einen Vergleicher V, der die Ausgangsspannung VAST der Spannungsversorgungsvorrichtung an der Ausgangsklemme A1 mit einer Referenzspannung V_{cc} vergleicht, gesteuert.

An den Eingangsklemmen E1 und E2 liegt damit die Busspannung UBus an, und der Strom IBus wird in die Eingangsklemme E1 eingeleitet. Nach der Stromquelle I1 ergibt sich ein Strom Iast, der über die Ausgangsklemme A1 an die Anwenderschnittstelle weitergeführt wird, so lange die Abzweigschaltung AS den Strom nicht in die Abzweigleitung AZL leitet.

Die übertragerlose Entkopplung wird mittels einer Begrenzung des Stromanstiegs di/dt sowie der Abzweigschaltung AS, die den Busstrom IBus übernimmt, sobald die Ausgangsspannung VAST kleiner als die Busspannung UBus ist, erreicht. Hiermit wird praktisch das Verhalten einer Induktivität zum Teil nachgebildet.

In der DE 10147924 A1 wird eine Spannungsversorgungseinrichtung mit einer Abzweigschaltung zwischen zwei Eingangsklemmen sowie mit einem Zeitglied offenbart.

Auch wenn eine erhöhte Leistung zur Verfügung gestellt werden soll, ist eine entsprechende Entkopplung von der Datenübertragung zu gewährleisten.

Die Aufgabe der vorliegenden Erfindung besteht somit darin, eine Busankopplung mit erhöhter Leistung und verbesserter Entkopplung von Spannungsversorgung und Datenübertragung bereitzustellen.

Erfindungsgemäß wird diese Aufgabe gelöst durch eine Spannungsversorgungsvorrichtung für ein Busgerät mit einer ersten Eingangsklemme und einer zweiten Eingangsklemme, eine erste Ausgangsklemme, die mit der ersten Eingangsklemme verbunden ist, und eine zweite Ausgangsklemme, die mit der zweiten Eingangklemme verbunden ist, sowie eine Abzweigschaltung, die zwischen die erste und zweite Eingangklemme geschaltet ist, zum Abzweigen eines Abzweigstroms von der ersten zur zweiten Eingangklemme, wobei die Abzweigschaltung mit einer Stromdetektoreinrichtung zum Detektieren der Stärke des Abzweigstroms versehen ist und eine Strombegrenzungseinrichtung an die erste oder zweite Eingangsklemme gekoppelt ist, mit der in Abhängigkeit von der detektierten Stärke des Abzweigstroms ein Strom in die erste oder zweite Eingangsklemme begrenzbar ist.

Des Weiteren ist erfindungsgemäß vorgesehen ein Verfahren zum Betreiben einer Spannungsversorgungsvorrichtung für ein Busgerät durch Abzweigen eines in die Spannungsversorgungsvorrichtung fließenden Stroms, Messen der Stärke des abgezweigten Stroms und Reduzieren des in die Spannungsversorgungsvorrichtung fließenden Stroms in Abhängigkeit von der gemessenen Stärke des abgezweigten Stroms.

In vorteilhafter Weise kann somit erreicht werden, dass unabhängig von Datenimpulsen der in das Busgerät fließende Strom konstant gehalten wird.

Vorzugsweise umfasst die Stromdetektoreinrichtung der erfindungsgemäßen Spannungsversorgungsvorrichtung ein Zeitglied, mit dem die Stromdetektion während eines vorgegebenen Datenimpulses eines Sendesignals unterbrechbar ist. Damit kann eine klare Entkopplung von den Datensignalen erfolgen, solange der Datenimpuls am Bus anliegt.

Die Stromdetektoreinrichtung umfasst günstigerweise einen Impulsdetektor für das Zurücksetzen, Aktivieren und/oder Nichtaktivieren des Zeitglieds. Mit dem Impulsdetektor lässt sich somit der Beginn und das Ende eines Datenimpulses bzw. Aktivimpulses bestimmen.

Das Zeitglied kann aus einem Tiefpass bestehen. Damit ist das Zeitglied auf einfache Weise gültig realisierbar.

Ferner kann der Impulsdetektor ein Differenzierglied umfassen. Damit lässt sich zuverlässig aus einem Datenimpuls dessen Beginn und Ende ermitteln.

Entsprechend einer besonders bevorzugten Ausführungsform ist mit der Strombegrenzungseinrichtung ein Überschreiten einer vorgegebenen Stromsteilheit verhinderbar. Damit führen Lastsprünge an der Ausgangsklemme nicht zu fehlerhaften Impulsen auf dem Bus.

Insbesondere ist es vorteilhaft, wenn der in die Spannungsversorgungsvorrichtung fließende Strom solange reduziert wird, bis die Ausgangsspannung der Spannungsversorgungsvorrichtung kleiner als ihre Eingangsspannung ist. Damit kann erreicht werden, dass die Ausgangsspannung nicht dauerhaft deutlich unter der Eingangsspannung bleibt.

Die vorliegende Erfindung ist anhand der beigefügten Zeichnungen näher erläutert, in denen zeigen:
- FIG 1: eine Prinzipsskizze eines Installationsbusses mit mehreren Busgeräten nach dem Stand der Technik;
- FIG 2: die Struktur eines Busgerätes nach dem Stand der Technik;
- FIG 3: eine Betriebsspannungsquelle eines Busankopplers nach dem Stand der Technik;
- FIG 4: eine Prinzipskizze eines erfindungsgemäßen Busankopplers;
- FIG 5: eine erfindungsgemäße Spannungsversorgungsvorrichtung; und
- FIG 6: den Verlauf eines über den Bus übertragenen Sendeimpulses.

Das nachfolgend näher geschilderte Ausführungsbeispiel stellt eine bevorzugte Ausführungsform der vorliegenden Erfindung dar.

Es soll über einen Buskoppler BK für eine Anwenderschnittstelle AST eine Leistungsversorgung mit 20V/25mA bereit gestellt werden können, wie dies in FIG 4 skizzenhaft angedeutet ist. Dabei soll die Spannungsversorgung SV über eine geeignete Entkopplung EE an den Bus B, z. B. ein EIB-Bus, angekoppelt werden.

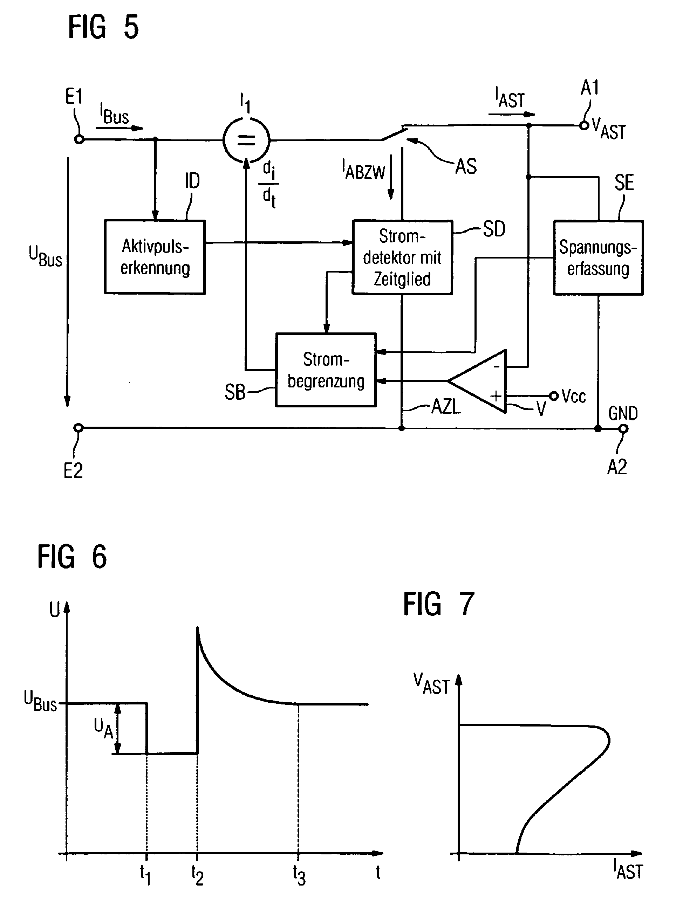

Entsprechend dem erfindungsgemäßen Konzept wird vermieden, dass sich ein stabiler Zustand unterhalb des zulässigen Spannungsbereichs der Busspannung U_{BUS} einstellt. Die Busspannung U_{BUS} liegt üblicherweise im Bereich von 21 bis 31 V. Das in FIG 5 wiedergegebene Beispiel einer erfindungsgemäßen Spannungsversorgungsschaltung basiert auf der in FIG 3 dargestellten Schaltung. Hinsichtlich der in beiden Schaltungen verwendeten Elemente und Größen wird daher auf die Beschreibung von FIG 3 hingewiesen.

Erfindungsgemäß ist in die Abzweigleitung AZL ein Stromdetektor SD mit Zeitglied geschaltet. Es misst den Strom I_{ABZW} der von der Abzweigschaltung AS in die Abzweigleitung AZL geführt wird. Mit einem entsprechenden Messwert steuert der Stromdetektor SD eine Strombegrenzungseinheit SB an, welche ihrerseits die steuerbare Stromquelle I₁ steuert bzw. regelt. Als weitere Eingangsgröße erhält die Strombegrenzungseinheit SB das Vergleichsergebnis des Vergleichers V, der die Ausgangsspannung V_{AST} mit der vorgegebenen Referenzspannung V_{CC} vergleicht. An die Eingangklemme E1 ist weiterhin ein Impulsdetektor ID zur Erkennung eines Daten- bzw. Aktivimpulses geschaltet. Das Detektionssignal wird dem Stromdetektor SD zugeführt und dort zur Steuerung des Zeitglieds verwendet.

Sobald der Abzweigstrom I_{ABZW} einen bestimmten Wert überschreitet, wird nach einer bestimmten Zeit der Strom I_{BUS} so lange reduziert, bis der Abzweigstrom I_{ABZW} ebenfalls wieder auf einen eingestellten Wert abgenommen hat. Dadurch wird die Ausgangsspannung V_{AST} der Busspannung U_{BUS} nachgeführt. Das Zeitglied, z. B. ein Tiefpass, ist erforderlich, damit bei einem Aktivimpuls der Strom I_{BUS} nicht reduziert wird.

In FIG 6 ist ein Daten- bzw. Aktivimpuls beispielhaft dargestellt. Dieser Impuls symbolisiert hier eine logische 0. Der Impuls beginnt zum Zeitpunkt t₁ mit einem Absinken der Busspannung U_{BUS} um den Wert U_{A}. Beispielsweise beträgt die Busspannung U_{BUS} 24V und die Spannungsreduktion U_{A} des Aktivimpulses beträgt 9V, so dass sich nach dem Zeitpunkt t₁ eine Busspannung von etwa 15V einstellt. Am Ende des Aktivimpulses zum Zeitpunkt t₂ steigt die Busspannung U_{BUS} sprunghaft an und sinkt anschließend bis zu einem Zeitpunkt t₃ in etwa exponentialförmig ab. Typischer Weise beträgt die Impulsdauer t2-t1 etwa 35 µs und die Gesamtdauer t3-tl, bis der Impuls abgeschwungen ist, etwa 104 µs.

Das Zeitglied im Stromdetektor SD überbrückt die Aktivimpulse eines Sendesignals. Es muss also dafür gesorgt werden, dass das Zeitglied zum Zeitpunkt t₁ (siehe FIG 6) nicht aktiviert bzw. zum Zeitpunkt t₂ zurückgesetzt wird. Für das Zurücksetzen des Zeitglieds wird der Impulsdetektor ID verwendet. Hierbei kann es sich beispielsweise um ein Differenzierglied handeln. Der Impulsdetektor ID muss zumindest die Information liefern, dass ein Aktivimpuls übertragen wurde. In einer einfacheren Ausführung kann das Zurücksetzen des Zeitglieds dadurch erreicht werden, dass für das Laden und Entladen eines Tiefpasses unterschiedliche Zeitkonstanten gewählt werden. Beispielsweise wird beim Entladen ein Ladewiderstand durch eine Diode überbrückt, so dass die Zeitkonstante reduziert wird. Das Nichtaktivieren kann ebenfalls durch einen Impulsdetektor oder, falls vorhanden, mittels des Empfangssignals erreicht werden.

Die Strombegrenzung, gegebenenfalls in Verbindung mit einem Kondensator, stellt sicher, dass eine bestimmte Stromsteilheit gemäß den Anforderungen des "Physical Layer Test" des Standards "KONNEX" bezüglich des Stroms I_{BUS} nicht überschritten wird.

Erfindungsgemäß wird somit durch die Verwendung einer Stromdetektorschaltung für den Abzweigstrom I_{ABZW}, die die Stromaufnahme vom Bus soweit reduziert, bis die Ausgangsspannung V_{AST} wieder kleiner als die Busspannung U_{BUS} ist, ein unzulässiger Zustand bezüglich der Ausgangsspannung V_{AST} vermieden.

Um die Verlustleistung im Überlastfall zwischen den Klemmen E1 und A1 zu reduzieren wird eine Verlustleistungsbegrenzung vorgesehen. Diese reduziert in Abhängigkeit z. B. von V_{AST} den maximal möglichen Strom I_{AST} (siehe FIG 7). Hierfür ist am Ausgang zwischen den Klemmen A1 und A2 eine Spannungserfassungseinheit SE (vgl. FIG 5), die der Strombegrenzungseinheit SB ein entsprechendes Steuersignal zuführt, vorgesehen.

## Patentansprüche

1. Spannungsversorgungsvorrichtung für ein Busgerät (BG1 bis BGn) mit
- einer ersten Eingangsklemme (E1) und einer zweiten Eingangsklemme(E2),
- einer ersten Ausgangsklemme (A1), die mit der ersten Eingangsklemme (E1) verbunden ist, und einer zweiten Ausgangsklemme (A2), die mit der zweiten Eingangklemme (E1) verbunden ist und
- einer Abzweigschaltung (AS), die zwischen die erste und zweite Eingangklemme (E1, E2)geschaltet ist, zum Abzweigen eines Abzweigstroms (I_{ABZW}) von der ersten zur zweiten Eingangklemme,
**dadurch gekennzeichnet, dass**
- die Abzweigschaltung (AS) mit einer Stromdetektoreinrichtung (SD) zum Detektieren der Stärke des Abzweigstroms (I_{ABZW}) versehen ist und
- eine Strombegrenzungseinrichtung (I₁, SB) an die erste oder zweite Eingangsklemme (E1, E2) gekoppelt ist, mit der in Abhängigkeit von der detektierten Stärke des Abzweigstroms (I_{ABZW}) ein Strom in die erste oder zweite Eingangsklemme (I_{BUS}) begrenzbar ist.

2. Spannungsversorgungsvorrichtung nach Anspruch 1, wobei die Stromdetektoreinrichtung (SD) ein Zeitglied umfasst, mit dem die Stromdetektion während eines vorgegebenen Datenimpulses eines Sendesignals unterbrechbar ist.

3. Spannungsversorgungsvorrichtung nach Anspruch 2, wobei die Stromdetektoreinrichtung (SD) einen Impulsdetektor (ID) für das Zurücksetzen, Aktivieren und/oder Nichtaktivieren des Zeitglieds umfasst.

4. Spannungsversorgungsvorrichtung nach Anspruch 2 oder 3, wobei das Zeitglied einen Tiefpass umfasst.

5. Spannungsversorgungsvorrichtung nach Anspruch 4, wobei die Zeitkonstante des Zeitglieds für das Rücksetzen des Zeitglieds durch eine an das Zeitglied geschaltete Diode reduziert ist.

6. Spannungsversorgungsvorrichtung nach Anspruch 3 oder 4, wobei der Impulsdetektor (ID) ein Differenzierglied umfasst.

7. Spannungsversorgungsvorrichtung nach einem der vorhergehenden Ansprüche, wobei mit der Strombegrenzungseinrichtung (I₁, SB) ein Überschreiten einer vorgegebenen Stromsteilheit verhinderbar ist.

8. Spannungsversorgungsvorrichtung nach einem der vorhergehenden Ansprüche mit weiterhin einer Verlustleistungsbegrenzungseinrichtung zur Ansteuerung der Strombegrenzungseinrichtung für eine Begrenzung der Verlustleistung zwischen Eingang und Ausgang der Spannungsversorgungsvorrichtung.

9. Verfahren zum Betreiben einer Spannungsversorgungsvorrichtung für ein Busgerät (BG1 bis BGn) nach einem der Ansprüche 1 bis 8 durch
- Abzweigen eines in die Spannungsversorgungsvorrichtung fließenden Stroms (I_{BUS}) durch die Abzweigschaltung (AS),
**gekennzeichnet, durch**
- Messen der Stärke des abgezweigten Stroms (I_{ABZW}) mit der Stromdetektoreinrichtung (SD) und
- Reduzieren des in die Spannungsversorgungsvorrichtung fließenden Stroms (I_{BUS}) **durch** die Strombegrenzungseinrichtung (I₁, SB) in Abhängigkeit von der gemessenen Stärke des abgezweigten Stroms (I_{ABZW}).

10. Verfahren nach Anspruch 9, wobei der in die Spannungsversorgungsvorrichtung fließende Strom (I_{BUS}) so lange reduziert wird, bis die Ausgangsspannung (V_{AST}) der Spannungsversorgungsvorrichtung kleiner als die Eingangsspannung (U_{BUS}) der Spannungsversorgungsvorrichtung ist.

11. Verfahren nach Anspruch 9 oder 10, wobei das Einsetzen der Stromreduzierung des in die Stromversorgungsvorrichtung fließenden Stroms (I_{BUS}) während eines vorgegebenen Datenimpulses eines Sendesignals verhindert wird.

## Claims

1. Power supply device for a bus device (BG1 to BGn) having
- a first input terminal (E1) and a second input terminal (E2),
- a first output terminal (A1), which is connected to the first input terminal (E1) and a second output terminal (A2) which is connected to the second input terminal (E1) and
- a branch circuit (AS), which is connected between the first and second input terminal (E1, E2), for branching a branch current (*I_{ABZW}*) from the first to the second input terminal,
**characterised in that**
- the branch circuit (AS) is provided with a current detector facility (SD) for detecting the strength of the branch current (*I_{ABZW}*) and
- a current limiting facility (I₁,SB) is coupled to the first or second input terminal (E1, E2), with which a current into the first or second input terminal (I*_{BUS}*) can be limited as a function of the detected strength of the branch current (*I_{ABZW}*).

2. Power supply device according to claim 1, with the current detector facility (SD) including a timing element, with which current detection can be interrupted during a predetermined data pulse of a transmit signal.

3. Power supply device according to claim 2, with the current detector facility (SD) including a pulse detector (ID) for resetting, activating and/or not activating the timing element.

4. Power supply device according to claim 2 or 3, with the timing element comprising a low pass filter.

5. Power supply device according to claim 4, with the time constant of the timing element being reduced for resetting the timing element by a diode connected to the timing element.

6. Power supply device according to claim 3 or 4, with the pulse detector (ID) comprising a differential element.

7. Power supply device according to one of the preceding claims, with it being possible to prevent a predetermined rate of current rise from being exceeded using the current limiting facility (I₁,SB).

8. Power supply device according to one of the preceding claims also having a power loss limiting facility for controlling the current limiting facility in order to limit the power loss between the input and output of the power supply device.

9. Method for operating a power supply device for a bus device (BG1 to BGn) according to one of claims 1 to 8, by
- branching a current (*I_{BUS}*) flowing into the power supply device by means of the branch circuit (AS),
**characterized by**
- measuring the strength of the branched current (*I_{ABZW}*) using the current detector facility (SD) and
- reducing the current (I*_{BUS}*) flowing into the power supply device by means of the current limiting facility (I₁,SB) as a function of the measured strength of the branched current (*I_{ABZW}*).

10. Method according to claim 9, with the current (I*_{BUS}*) flowing into the power supply device being reduced until the output voltage (*V_{AST}*) of the power supply device is less than the input voltage (I*_{BUS}*) of the power supply device.

11. Method according to claim 9 or 10, with the introduction of the current reduction of the current (I*_{BUS}*) flowing into the power supply device being prevented during a predetermined data pulse of a transmit signal.

## Revendications

1. Dispositif d'alimentation en tension pour un dispositif de bus (BG1 à BGn) avec
- une première borne d'entrée (E1) et une deuxième borne d'entrée (E2),
- une première borne de sortie (A1) qui est reliée à la première borne d'entrée (E1) et une deuxième borne de sortie (A2) qui est reliée à la deuxième borne d'entrée (E2) et
- un circuit de dérivation (AS) qui est monté entre les première et deuxième bornes d'entrée (E1, E2) pour dériver un courant dérivé (I_{ABZW}) de la première vers la deuxième borne d'entrée,
**caractérisé en ce que**
- le circuit de dérivation (AS) est pourvu d'un dispositif de détection de courant (SD) pour détecter l'intensité du courant dérivé (I_{ABZW}) et
- un dispositif de limitation de courant (I₁, SB) est couplé à la première ou à la deuxième borne d'entrée (E1, E2), lequel permet de limiter un courant vers la première ou la deuxième borne d'entrée (I_{BUS}) en fonction de l'intensité détectée du courant dérivé (I_{ABZW}).

2. Dispositif d'alimentation en tension selon la revendication 1, le dispositif de détection de courant (SD) comprenant un temporisateur qui permet d'interrompre la détection de courant pendant une impulsion de données prédéfinie d'un signal d'émission.

3. Dispositif d'alimentation en tension selon la revendication 2, le dispositif de détection de courant (SD) comprenant un détecteur d'impulsions (ID) pour la réinitialisation, l'activation et/ou la non-activation du temporisateur.

4. Dispositif d'alimentation en tension selon la revendication 2 ou 3, le temporisateur comprenant un passe-bas.

5. Dispositif d'alimentation en tension selon la revendication 4, la constante de temps du temporisateur, pour la réinitialisation du temporisateur, étant réduite par une diode connectée au temporisateur.

6. Dispositif d'alimentation en tension selon la revendication 3 ou 4, le détecteur d'impulsions (ID) comprenant un différenciateur.

7. Dispositif d'alimentation en tension selon l'une des revendications précédentes, le dispositif de limitation de courant (I₁, SB) permettant d'empêcher le dépassement d'une pente de courant prédéfinie.

8. Dispositif d'alimentation en tension selon l'une des revendications précédentes, comprenant en outre un dispositif de limitation de pertes en puissance pour la commande du dispositif de limitation de courant pour une limitation de pertes en puissance entre l'entrée et la sortie du dispositif d'alimentation en tension.

9. Procédé pour faire fonctionner un dispositif d'alimentation en tension pour un dispositif de bus (BG1 à BGn) selon l'une des revendications 1 à 8 par
- dérivation, par le circuit de dérivation (AS), d'un courant (I_{BUS}) qui s'écoule vers le dispositif d'alimentation en tension, **caractérisé par**
- la mesure de l'intensité du courant dérivé (I_{ABZW}) avec le dispositif de détection de courant (SD) et
- la réduction du courant (I_{BUS}), qui s'écoule vers le dispositif d'alimentation en tension, par le dispositif de limitation de courant (I₁, SB) en fonction de l'intensité mesurée du courant dérivé (I_{ABZW}).

10. Procédé selon la revendication 9, le courant (I_{BUS}) qui s'écoule vers le dispositif d'alimentation en tension subissant une réduction jusqu'à ce que la tension de sortie (V_{AST}) du dispositif d'alimentation en tension soit inférieure à la tension d'entrée (U_{BUS}) du dispositif d'alimentation en tension.

11. Procédé selon la revendication 9 ou 10, le démarrage de la réduction de courant du courant (I_{BUS}) qui s'écoule vers le dispositif d'alimentation en courant étant empêché pendant une impulsion de données prédéfinie d'un signal d'émission.
